# EUROPÄISCHE PATENTSCHRIFT

(11) **EP 2 251 936 B1**
(45) Veröffentlichungstag und Bekanntmachung des Hinweises auf die Patenterteilung: **18.01.2012**
(21) Anmeldenummer: 09156039.1
(22) Anmeldetag: 24.03.2009
(51) Int. Cl.: H01R 4/24, H01R 9/03

(54) **Kabelabzweigklemme**
Cable tap
Borne de dérivation pour câble

(43) Veröffentlichungstag der Anmeldung: 17.11.2010
(73) Patentinhaber: GT Elektrotechnische Produkte GmbH, 79761 Waldshut-Tiengen (DE); Fuchs GmbH & Co. KG, 51647 Gummersbach (DE)
(72) Erfinder: Fuchs, Timo, 51709 Marienheide (DE); Paulmann, Uwe, 79790 Dangsetten (DE)

(56) Entgegenhaltungen:
- EP-A- 0 769 825
- BE-A1- 747 490
- DE-A1- 2 227 211
- FR-A- 2 135 400
- GB-A- 875 524
- GB-A- 2 061 637
- US-A- 4 080 024

## Beschreibung

Die Erfindung bezieht sich auf eine Kabelabzweigklemme zum Verbinden von mindestens einem aus mehreren Adern bestehenden Kabelstrang und einem aus mindestens einer Ader bestehenden Abzweigkabel, bestehend aus
- mindestens einem ringförmigen Kontaktträger zur Aufnahme der Kabel,
- mindestens einem Kontaktelement, das innerhalb des Kontaktträgers angeordnet und zur Herstellung einer elektrisch leitenden Verbindung zwischen dem Kabelstrang und dem Abzweigkabel vorgesehen ist und
- mindestens einem Druckkörper, der mit dem Kontaktelement innerhalb des Kontaktträgers verschiebbar gelagert ist.

### Stand der Technik

Kabelabzweigklemmen oder auch Kabelabzweigmuffen sind Vorrichtungen zum Herstellen und Isolieren einer Verbindung zwischen einem Hauptkabel, beispielsweise einen Kabelstrang und einem Abzweigkabel, die zumeist im Erdreich verlegt werden. Sie dienen insbesondere der Herstellung von Hausanschlüssen. Sie sind aber auch zur Herstellung von elektrischen Verbindungen im Niederspannungsbereich geeignet. Insbesondere im Bereich der Telekommunikation (Internet und Telefon) können solche Abzweigklemmen dazu dienen, elektrische Kabel entsprechend zu verzweigen. Bekannte Kabelabzweigklemmen sind als Abzweigklemmring ausgebildet, wobei dieser Abzweigklemmring zur Herstellung einer elektrischen Verbindung zwischen einem Kabelstrang, der aus unterschiedlichen Adern besteht und einem Abzweigkabel, dient. In der Regel weisen diese Vorrichtungen einen aus einem oder mehreren Teilen bestehenden Kontaktträger auf, der zur Aufnahme des Kabelstranges dient. In diesem Kontaktträger sind Kontaktelemente, beispielsweise in Form von Kontaktzähnen oder Kontaktschneiden angeordnet, die durch Zusammenspannen der einzelnen Teile der Kontaktträger eine Ummantelung des Kabelstranges bzw. der unterschiedlichen Adern durchdringen und diesen kontaktieren. Zudem weisen die Kontaktträger auch Aufnahmebereiche auf, die zur Aufnahme des Abzweigkabels geeignet sind. Auch die Abzweigkabel sind derart angeordnet, dass sie durch Zusammenfügen der entsprechenden Kontaktträger die Kontaktelemente kontaktieren und so eine elektrische Verbindung zwischen dem Kabelstrang und dem Abzweigkabel herbeiführen.

Um zu vermeiden, dass Feuchtigkeit in das Gehäuse des Kontaktträgers eindringt, wird nach Herbeiführung der elektrischen Verbindung das Gehäuse mit einem aushärtenden und isolierenden Giessmaterial ausgefüllt. Anschliessend kann die Kabelabzweigmuffe beispielsweise im Erdreich vergraben werden.

Die aus dem Stand der Technik bekannten Kabelabzweigmuffen bestehen aus sehr vielen einzelnen Bauteilen, wobei die einzelnen Bauteile sehr komplex aufgebaut sind. Die Abzweigklemmen sind in der Regel so ausgeführt, dass zwischen dem Kabelstrang und dem Abzweigkabel entsprechende Kräfte übertragen werden können, damit die Kontaktelemente in Form von Schneiden durch die Isolierung der einzelnen Kabeln dringen können. An die Kabelabzweigmuffen werden extrem hohe Belastungen gestellt, da zum einen die Spannkräfte auf die einzelnen Adern übertragen werden müssen und zum anderen die Belastungen im Erdreich ebenfalls hoch sind. Die Montage ist aufwendig, da sehr viele Einzelschritte ausgeführt werden müssen, um eine zuverlässige Kontaktierung zu erreichen.

Insbesondere besteht die Gefahr bei der Montage darin, dass bei der Kontaktierung des Kabelstrangs die Kontaktelement freiliegen, sodass eine Montage ohne Abschaltung des Stromes in der Regel nicht möglich ist. Insbesondere die Montage einer solchen Kabelabzweigklemme, unter feuchten Witterungsbedingungen, muss sehr sorgfältig und unter Beachtung jeglicher Sicherheitsvorschrift erfolgen.

Kabelabzweigklemmen sind in vielfältigen Ausführungen bekannt. Beispielsweise zeigen solche Kabelabzweigklemmen die DE 199 46 885 C1, die EP 0923 160 A1, die DE 10 2004 047157 B4 sowie die FR-A-2 135 400.

Beispielsweise zeigt die DE 10 2004 047157 B4 eine Kabelabzweigklemme zum Verbinden eines mehradrigen Kabelstranges mit einem Abzweigkabel. Zusätzlich zu dem Stand der Technik bekannten Kontaktträgern sind so genannte Trennstäbe zum Anordnen in einer ersten Ebene und ein weiterer Trennstab zum Anordnen in einer zur ersten Ebene senkrechten Ebene vorgesehen. Diese beiden Trennstäbe dienen dazu, die einzelnen Adern des Kabelstranges aufzuweiten, sodass zum einen eine Kontaktierung innerhalb des Kontaktträgers möglich ist und zum anderen dazu, dass ein mögliches Vergiessen mittels Giessharz, wie bereits zuvor beschrieben, durchgeführt werden kann.

Auch aus dieser, aus dem Stand der Technik bekannten Kabelabzweigmuffe, ergibt sich der Nachteil, dass es sich um ein sehr komplexes Bauteil handelt, das aus unterschiedlichen Elementen besteht, sodass die Vorrichtung in Bezug auf ihre Herstellung teuer ist.

Insbesondere ist in der FR-A- 2 135 400 eine Kabelabzweigklemme beschrieben, mit der ein dreiadriger Kabelstrang mit einem Abzweigkabel zum Zwecke einer Erdverlegung miteinander verbunden werden sollen. Diese Kabelabzweigklemme besitzt einen dreiteiligen Kontaktträger, der zusammengesetzt einen Ring bildet, in dessen Zentrum der Kabelstrang mit drei Adern angeordnet ist. Das ebenfalls drei Adern besitzende Abzweigkabel wird dagegen mit diesen Adern jeweils radial gegenüber den Adern des Kabelstrangs zwischen einem Kontaktelement und einem Druckkörper in der Form eine Zustellschraube gehalten. Ferner wird der dreiteilige Kontaktträger durch eine bandförmige Rohrschelle zusammengehalten, die ein schraubenförmiges Anzugselement aufweist.

Bei dieser Kabelabzweigklemme sind in jedes der drei Teile des zu einem Ring zusammengesetzten Kontaktträgers je ein Aderende des Abzweigkabels eingebracht, wogegen die drei Adern des Kabelstrangs, nebst Abstandsflächen zwischen diesen, mittig in den Kontaktträger eingesetzt sind. Zur Befestigung der Aderenden des Abzweigkabels werden die Zustellschrauben als Druckkörper verwendet , wodurch diese in den Kontaktelementen fixiert werden. Gleichzeitig bewirken die Zustellschrauben, dass die Kontaktelemente mit einer endseitig vorgesehenen Verzahnung in die Adern des mittigen Kabelstrangs eingedrückt werden, wodurch ein elektrischer Kontakt hergestellt wird. Das Verspannen durch die Zustallschrauben erfolgt dabei derart, dass sich diese jeweils über einen Ring an einer Schulter des Kontaktträgers abstützten.

Bei dieser bekannten Kabelabzweigklemme besteht jedoch das Problem, dass die einzelnen Zustellschrauben individuell eingeschraubt werden müssen, wodurch nicht immer sichergestellt ist, dass alle Zustellschrauben das gleiche Anzugsmoment erfahren haben und somit die angestrebten elektrischen Kontakte möglicherweise nicht alle gleichmässig sind, was nach einer Erdverlegung schwerlich behoben werden kann.

### Aufgabe der Erfindung

Aufgabe der Erfindung ist es daher, die aus dem Stand der Technik bekannten Kabelabzweigklemmen derart weiterzubilden, dass diese kostengünstiger und montagefreundlicher sind und darüber hinaus vor allem einen hohen Sicherheitsstandart aufweisen.

### Lösung der Aufgabe

Die Aufgabe wird durch eine Kabelabzweigklemme mit den Merkmalen des Anspruchs 1 gelöst. Vorteilhafte Ausgestaltungen der erfindungsgemässen Kabelabzweigklemme sind in den Unteransprüchen ausgeführt.

### Vorteile der Erfindung

Besonders zweckmässig ist es, wenn die Führung für den jeweils innerhalb des Kontaktträgors zwangsgeführten Druckkörper Rastelemente aufweist; durch die es möglich wird, einmal den Druckkörper vorzufixieren, und darüber hinaus, ist dieser dadurch in seiner Endlage unwiderruflich festgelegt, sodass sich die elektrische Verbindung nicht mehr lockern kann.

Ein weitere Vorteil kann gegeben sein, wenn man als Trennflächen zwischen dem Kabelstrang einen Haupt- und zwei Nebenkeile vorsieht, die die einzelnen Adern des Kabelstranges aufweiten, sodass zwischen den Adern ausreichend Raum ist, um diesen beispielsweise mit Giessharz ausfüllen zu können.

Die Haupt- und Nebenkeile können zusätzlich die vorteilhafte Möglichkeit bieten, dass ihre aus dem Kabelstrang abstehenden freien Enden derart ausbildet sind, dass die einzelnen Teile der Kontaktträger aufgenommen werden können, und zwar derart, dass diese entweder auf die freien Enden aufschiebbar oder aufklipsbar sind.

Eine weitere vorteilhafte Ausgestaltung besteht darin, dass unmittelbar nach der Montage der Haupt- und Nebenkeile sowie der einzelnen Kontaktträgerteile, die erfindungsgemässen Druckkörper in die vorgesehenen Ausnehmungen eingeführt werden können. Vorzugsweise verrasten diese bereits dort in einer ersten Stellung, sodass sie unverlierbar mit den Kontaktträgern verbunden sind.

Ferner ist vorgesehen, dass die Druckkörper Aufnahmebereiche aufweisen, die die Adernenden des Abzweigkabels aufnehmen. Damit wird das Ziel erreicht, dass nach Einführung der Druckkörper in entsprechende Ausnehmungen in dem Kontaktträger und durch Andrücken der Druckkörper in Richtung der Kontaktelemente, eine Vorfixierung erreicht wird. Diese kann dazu dienen, nochmals zu prüfen, ob die Anordnung korrekt ist. Die Druckkörper verrasten vorzugsweise in den Ausnehmungen und können nicht mehr entnommen werden. Sie können in den Ausnehmungen soweit verschoben werden, bis eine elektrische Verbindung zwischen den Adern des Kabelstranges und den Adernenden des Abzweigkabels hergestellt ist. Beispielsweise kann der Druckkörper mit dem Daumen des Benutzers bewegt werden.

Gemäss der vorliegenden Erfindung ist vorgesehen, dass auf dem Umfang des Kontaktträgers ein Funktionselement angeordnet ist, das gleichzeitig alle Druckkörper radial in Richtung der Kontaktelemente drücken kann. Damit wird in vorteilhafter Weise gleichzeitig erreicht, dass alle Kontaktierungen mit der gleichen Kraft beaufschlagt werden, sodass eine funktionsgerechte Ausführung gewährleistet werden kann.

Das Funktionselement, vorzugsweise eine Ringschelle, kann derart ausgebildet sein, dass mittels eines Schraubendrehers die Ringschelle, die den Kontaktträger vollständig mit ihrem Umfang umgibt, derart festgezogen wird, bis ein entsprechendes Drehmoment erreicht wird. Ist diese Grenze überschritten, so bricht, realisiert über eine Sollbruchstelle, ein Anzugselement des Funktionselements an dem Bereich ab, der mit dem Schraubendreher in Verbindung steht.

Dadurch kann zum einen eine Überbelastung der einzelnen Druckkörper vermieden werden, aber auch zum anderen unmittelbar erkannt werden, dass ein ausreichendes Drehmoment aufgebracht worden ist, damit die Druckkörper die entsprechende Herbeiführung der elektrischen Kontaktierung erreicht haben. Der Benutzer sieht somit, dass die Kabelabzweigklemme funktionsgerecht installiert ist.

Die zuvor beschriebene Verrastung hat weiter den Vorteil, dass dadurch die Montage erleichtert wird. Bevor das Funktionselement in Form einer Ringschelle über die Druckkörper gelegt wird, sind diese bereits unverlierbar mit dem Kontaktträger verbunden, sodass für den Benutzer ausschliesslich noch die Aufgabe besteht, dieses Funktionselement über den Kontaktträger anzuordnen und mit einem entsprechenden Schraubelement, beispielsweise einen Schraubendreher, den entsprechenden Druck auf die Druckkörper auszuüben.

Weitere vorteilhafte Ausgestaltungen gehen aus der nachfolgenden Beschreibung und den Zeichnungen hervor.

### Zeichnungen

Es zeigen:
- **Fig. 1**: eine perspektivische Ansicht auf die erfindungsgemässe Kabelabzeigklemme mit einem entsprechenden Kabelstrang (jedoch ohne Abzweigkabel);
- **Fig. 2**: eine Seitenansicht auf die Kabelabzweigklemme gemäss Fig. 1;
- **Fig. 3**: eine Vorderansicht auf die Kabelabzweigklemme gemäss Fig. 1;
- **Fig. 4**: eine perspektivische Ansicht auf ein Teil eines Kontaktträgers der Kabelabzweigklemme gemäss Fig. 1;
- **Fig. 5**: eine Seitenansicht auf einen Druckkeil, nämlich den Hauptkeil der erfindungsgemässen Kabelabzweigklemme;
- **Fig. 6**: eine Seitenansicht auf den Hauptkeil gemäss Fig. 5;
- **Fig. 7**: eine perspektivische Ansicht auf einen Druckkeil, nämlich den Nebenkeil für die Kabelabzweigklemme gemäss Fig. 1;
- **Fig. 8**: eine Seitenansicht auf den Nebenkeil gemäss Fig. 7 und
- **Fig. 9 [A - 1]**: schematische Darstellungen einer Montage der Kabelabzweigklemme an einem Kabelstrang, bestehend aus vier Adern, zur Herstellung einer elektrischen Verbindung mit einem Abzweigkabel, bestehend ebenfalls aus vier Adern.

### Beschreibung eines Ausführungsbeispiels

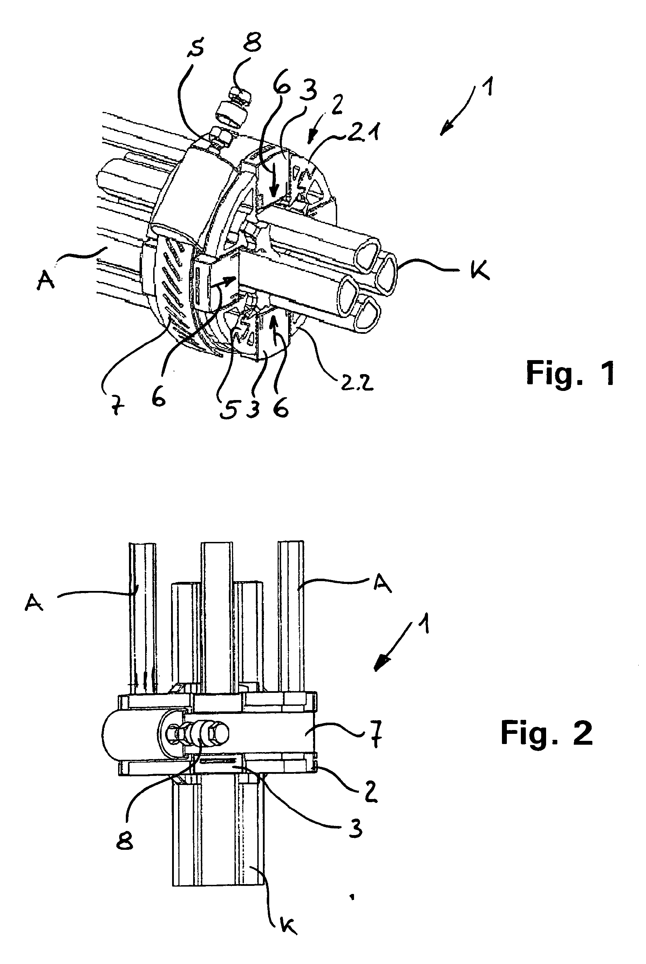

In den Fig. 1 bis 3 ist ein Ausführungsbeispiel einer Kabelabzweigklemme 1 gezeigt. Diese Kabelabzweigklemme 1 dient dazu, einen Kabelstrang K mit einem Abzweigkabel A elektrisch leitend zu verbinden.

Die Kabelabzweigklemme 1 besteht aus mindestens einem Kontaktträger 2 sowie in dem Kontaktträger 2 gelagerten und verschiebbar angeordneten Druckkörpern 3. Innerhalb des Kontaktträgers 2 sind Kontaktelemente 4 vorgesehen. Sie dienen dazu, einen elektrischen Kontakt von dem Kabelstrang K zu dem Abzweigkabel A herzustellen.

Die Kontaktträger 2 sind rotationssymmetrisch angeordnet und bestehen bei dem hier dargestellten Ausführungsbeispiel aus zwei Teilen, nämlich einem ersten Kontaktträger 2.1 und einem zweiten Kontaktträger 2.2. Die beiden Kontaktträger 2.1 und 2.2 sind über eine Führung 5 bei dem hier dargestellten Ausführungsbeispiel als Schwalbenschwanzführung ausgebildet - sowohl kraft- als auch formschlüssig verbunden, sodass sich ein rotationssymmetrisches Bauteil ergibt.

Damit die Druckkörper 3 in Richtung des mit 6 bezeichneten Pfeils und damit in Richtung der Kontaktelemente 4 gedrückt werden kann und so die Adern des Abzweigkabels A in die Kontaktelemente 4 und diese wiederum in den Kontaktträger 2 hineingepresst werden, ist ein Funktionselement 7 vorgesehen, das als Ringschelle ausgebildet ist. Diese Ringschelle, an sich auch bekannt als Rohrschelle aus dem Sanitärbereich, dient dazu, gleichzeitig eine Kraft auf alle Druckkörper 3 auszuüben, damit diese in Richtung des Pfeils 6 bewegt werden. Dies wird dadurch erreicht, dass mittels eines Hilfsinstruments 8, beispielsweise eines Schraubendrehers, das Funktionselement 7 derart verändert wird, dass dieses auf dem Umfang der Kabelabzweigklemme 1 anliegt und seinen Durchmesser verringert.

Ist ein definiertes Drehmoment erreicht, so bricht dieses vorzugsweise an einer Sollbruchstelle S ab. Somit ist gewährleistet, dass an den Druckkörpern 3 jeweils in Richtung des Pfeils 6 die Adern des Abzweigkabels A mit einer entsprechenden Druckkraft festgeklemmt sind.

Bei dem hier dargestellten Ausführungsbeispiel ist zusätzlich vorgesehen, so genannte Druckkeile vorzusehen. Ein Druckkeil, nämlich ein Hauptkeil 9 dient dazu, in einer ersten Ebene E1 die vier Adern des Kabelstranges - bezeichnet mit K1, K2, K3 und K4 - auseinander zu drücken, wobei in einer weiteren Ebene E2 zwei Nebenkeile 10 die Adern K1 - K4 des Kabelstranges K ebenfalls auseinander drücken, sodass jeweils ein symmetrischer Abstand zu den einzelnen Adern K1 - K4 des Kabelstranges K entsteht.

Die mit 11 bezeichneten freien Enden des Hauptkeils 9 sowie die mit 12 bezeichneten freien Enden der Nebenkeile 10 dienen dazu, nachdem der Kabelstrang K entsprechend aufgeweitet worden ist, die Kontaktträger 2.1 und 2.2 aufzunehmen.

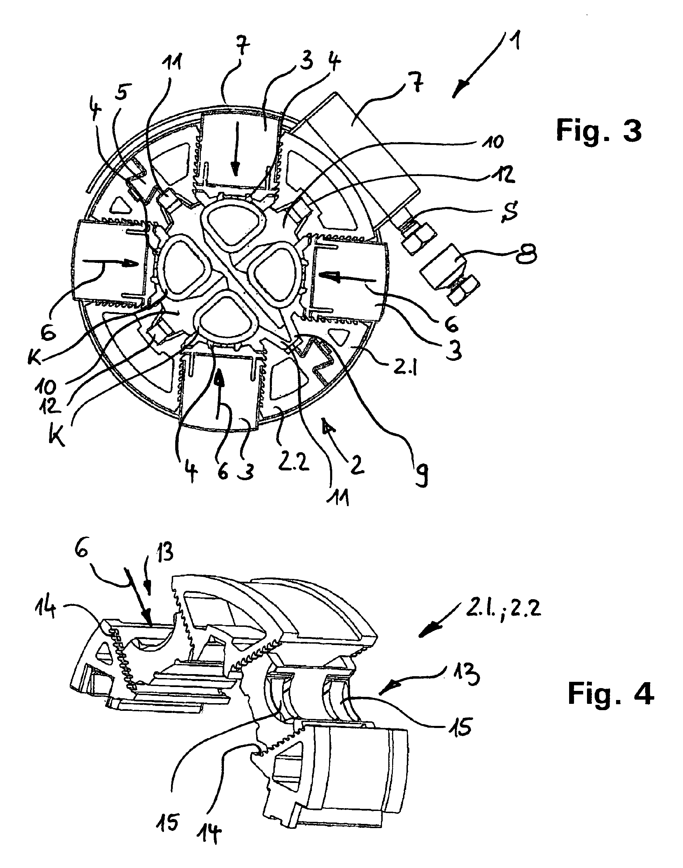

In Fig. 4 ist perspektivisch ein Teil des Kontaktträgers 2, nämlich ein erstes Teil eines Kontaktträgers 2.1 dargestellt. Hieraus ersichtlich sind Aufnahmebereiche 13 vorgesehen, die dazu geeignet sind, die Druckkörper 3, wie sie in den Figuren 1 bis 3 dargestellt sind, aufzunehmen. In den Führungen für die Druckkörper 3 sind Rastelemente 14 angeordnet. Diese Rastelemente 14 sind derart ausgestaltet, dass der jeweilige Druckkörper 3 ausschliesslich in Richtung des Pfeils 6 gedrückt werden kann, sodass entgegen der Pfeilrichtung 6 die Verrastung wirkt. Dies bringt den Vorteil mit sich, dass bei dem Anordnen der Adern des Abzweigkabels A, die mit den Druckkörpern 3 verbunden sind, eine Vorfixierung erreicht werden kann, sodass es für den Benutzer sehr einfach ist, das Funktionselement 7 auf der Umfangsfläche der Kabelabzweigklemme 1 anzuordnen.

Zusätzlich sind Aussparrungen 15 vorgesehen, die dazu dienen, die Kontaktelemente 4 wie sie beispielsweise in Fig. 3 dargestellt sind, aufzunehmen. Ferner führen die Kontaktelemente 4 eine elektrische Verbindung zwischen dem Kabelstrang K und dem Abzweigkabel A herbei. Diese Kontaktelemente 4 sind elektrisch leitend und mit Spitzen versehen.

Vorzugsweise weisen diese mehrere Spitzen auf, so dass in Seitenansicht eine zackenartige Ausgestaltung vorhanden ist. Im Grund der jeweiligen Kontaktelement 4 sind zusätzliche Aussparungen vorgesehen, um verdrängtes Material der einzelnen Adern K1 - K4 des Kabelstrangs K, nämlich die Isolierung, die beim Durchdringungsvorgang beiseite gedrückt wird, aufzunehmen.

Der Kontaktträger 2 selbst ist vorzugsweise ein Kunststoffteil, bevorzugt als Spritzgussteil ausgelegt.

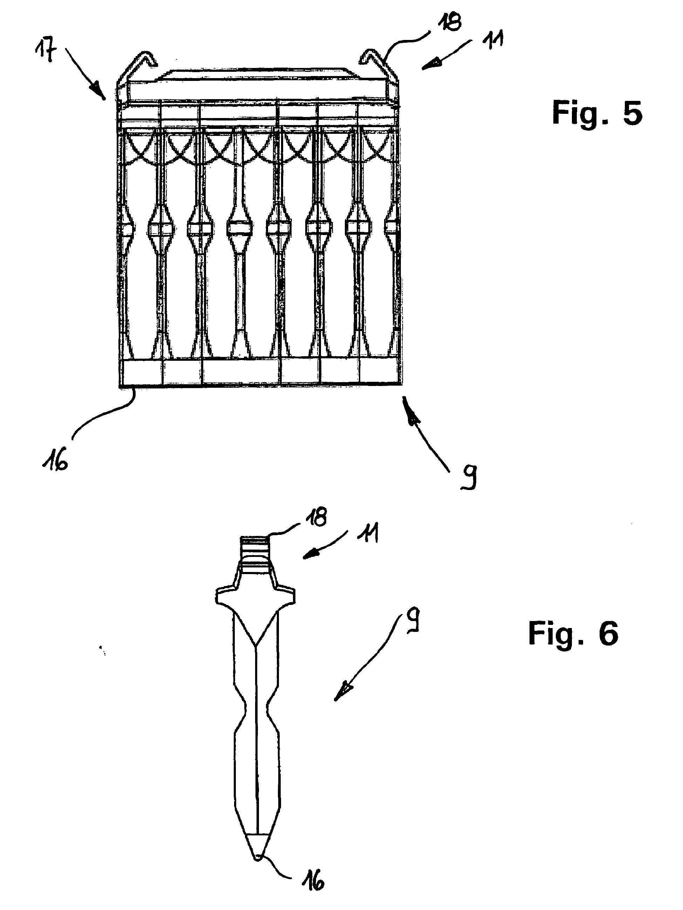

In Fig. 5 ist der Hauptkeil 9 gezeigt. Dieser Hauptkeil 9, wie er auch in Fig. 6 als Seitenansicht dargestellt ist, weist eine schwertartige Form auf, damit mit seiner mit 16 bezeichneten Spitze ein Auseinandertreiben der einzelnen Adern K1 - K4 des Kabelstranges K möglich ist, d. h. um diesen entsprechend aufzuweiten. Vorzugsweise ist der Hauptkeil 9 entsprechend breit ausgestaltet, damit auch eine flächige Aufspreizung möglich ist.

Das freie Ende 11 des Hauptkeils 9 ist derart gestaltet, dass es einen Aufnahmebereich 17 aufweist, der dafür geeignet ist, um die Kontaktträger 2.1 bzw. 2.2 aufzunehmen. Zusätzlich sind Clipselemente 18 vorgesehen, die dazu dienen, eine zumindest geringfügige Verrastung herbeizuführen.

Wie in der Seitenansicht gemäss Fig. 6 dargestellt, ist eine entsprechende Auflagefläche 19 vorgesehen, die eine form- und kraftschlüssige Verbindung des Hauptkeils 9 mit den entsprechenden Kontaktträgern 2 zulässt.

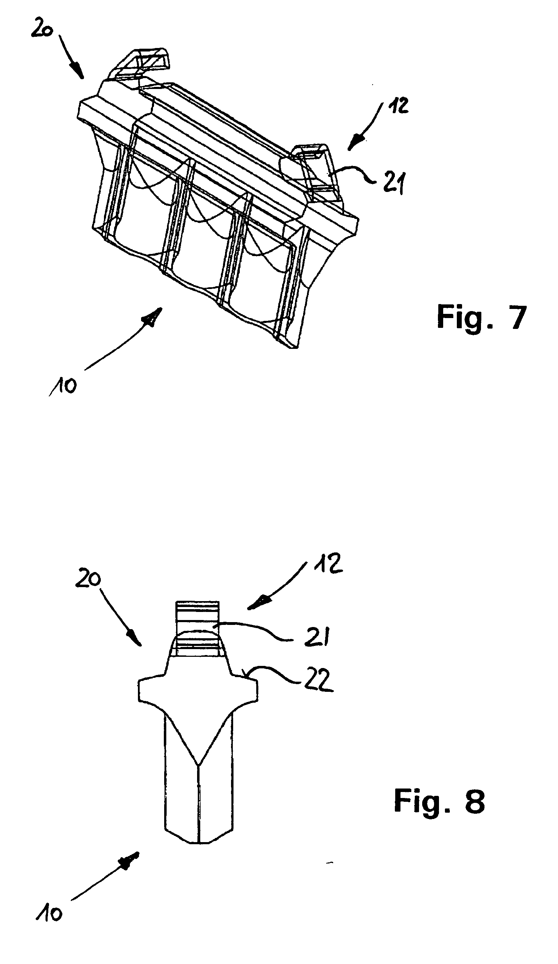

In Fig. 7 und 8 ist einer der Nebenkeile 10 dargestellt, die sich von dem Hauptkeil 9 dadurch unterscheiden, dass sie in ihrer Tiefe geringer sind und nicht den gesamten Kabelstrang K durchdringen. Die Nebenkeile 10 sind vorzugsweise senkrecht zu der Ebene E1 anzuordnen, die durch den Hauptkeil 9 bereits gebildet wird. Auch die freien Enden 12 des Nebenkeils 10 sind derart gestalten, dass sie jeweils einen Aufnahmebereich 20 aufweisen, wobei der Aufnahmebereich 20 zusätzlich Clipselemente 21 zur Herbeiführung einer Verrastung mit den Kontaktträgern 2 vorgesehen sind.

Auch in Seitenansicht zeigt der Nebenkeil 10 eine Auflagefläche 22 zur Herbeiführung einer vorzugsweise form- und kraftschlüssigen Verbindung mit dem Kontaktträger 2.

### Funktionsweise

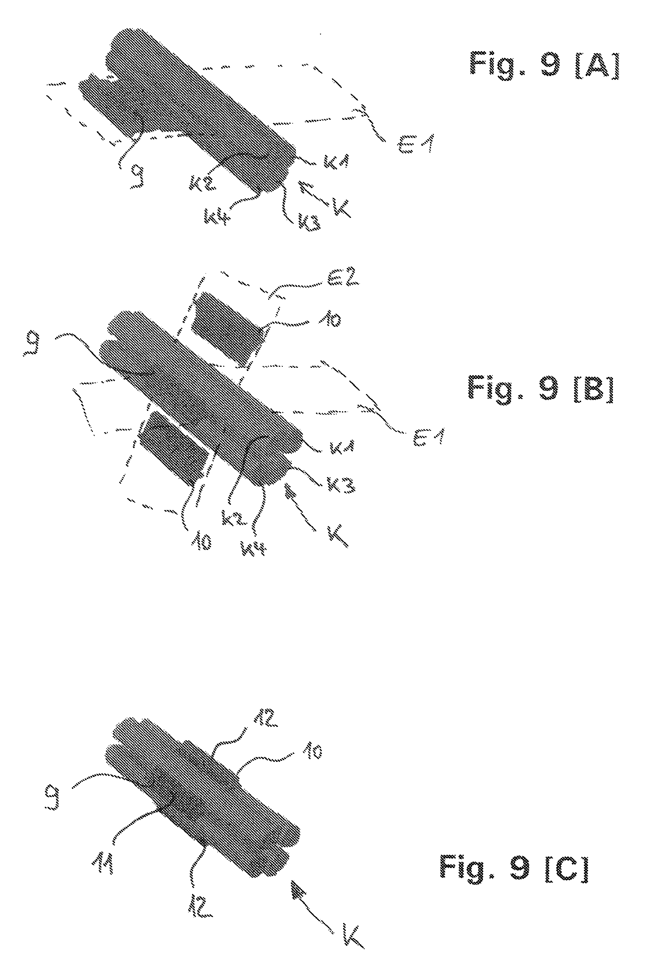

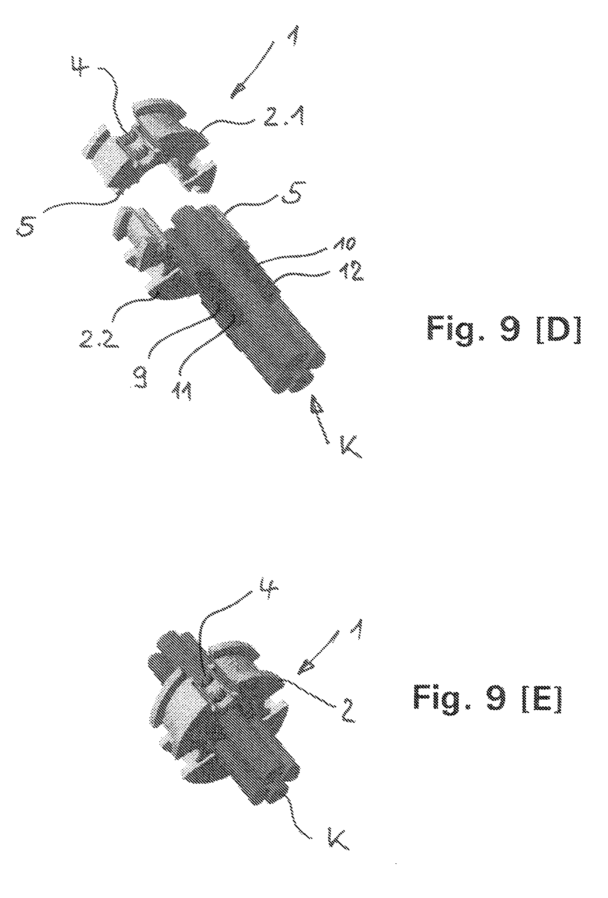

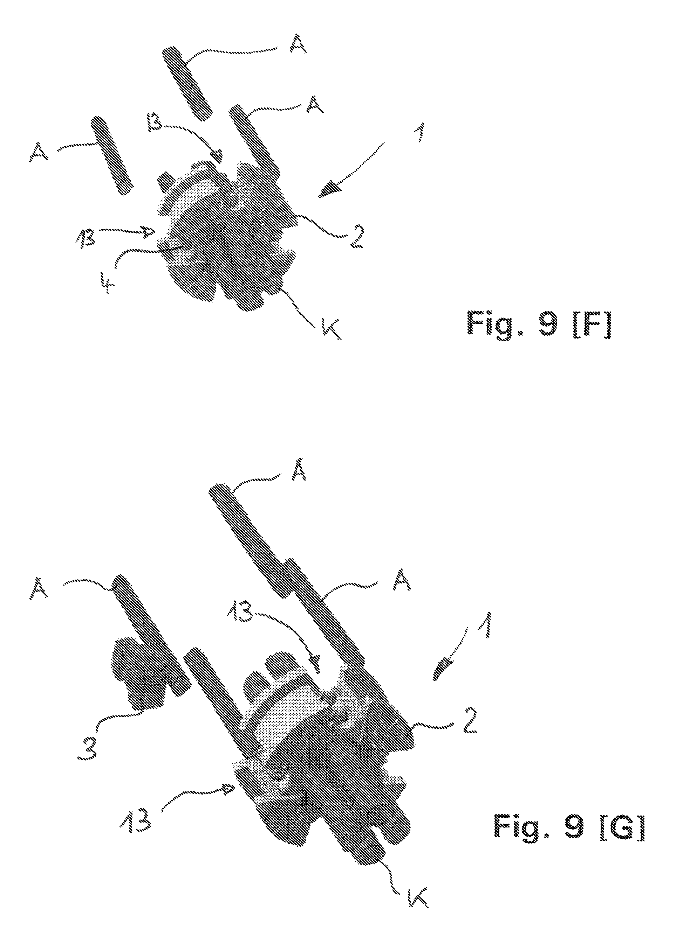

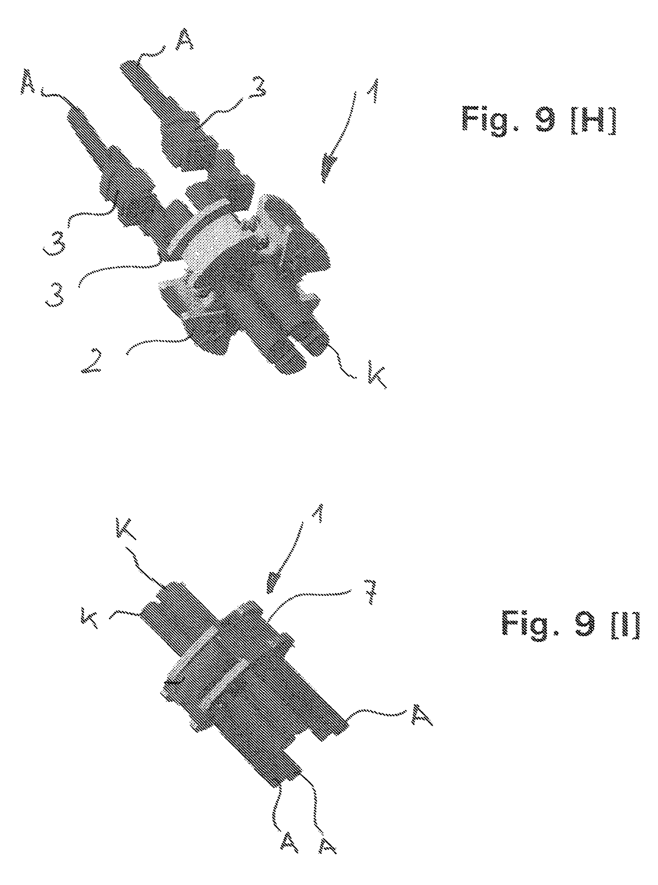

In Fig. 9 [A] ist der Kabelstrang K mit vier Adern K1, K2, K3, K4, dargestellt. Um die entsprechende Aufweitung des Kabelstranges K herbeizuführen, wird der Hauptkeil 9 in einer Eben E1 zwischen die einzelnen Adern K2 und K4 des Kabelstrangs K eingeführt. Ist dieser eingeführt, so wie es in Fig. 9 [B] gezeigt ist, werden die einzelnen Nebenkeile 10 in einer Ebene E2 zwischen die Adern K1, K2 bzw. K3 und K4 eingeführt. Die beiden Ebenen E1 und E2 stehen somit senkrecht zueinander. Aufgrund der Ausgestaltung der entsprechenden Druckkeile (Hauptkeil 9, Nebenkeile 10) ist die entsprechende Aufweitung herbeigeführt.

Wie in Fig. 9 [C] dargestellt, ragen die freien Enden 11 des Hauptkeils 9 sowie die freien Enden 12 der Nebenkeile 10 über dem Gesamtquerschnitt des Kabelstranges K hinaus und sind somit bereit für eine entsprechende Aufnahme der Kontaktträger 2.1 und 2.2, wie es in Fig. 9 [D] dargestellt ist. Vorzugsweise werden die entsprechenden Kontaktträger 2,1 und 2,2 zunächst auf die freien Enden 11 bzw. 12 der jeweiligen Druckkeile (Hauptkeil 9, Nebenkeil 10) aufgeschoben, wobei gleichzeitig die Führungen 5 der jeweiligen Kontaktträger 2 ebenfalls ineinander geführt werden, sodass, wie in Fig. 9 [E] dargestellt, ein bereits form- und kraftschlüssig mit dem Kabel K verbundene ringförmige Einheit entstanden ist.

Die erfindungsgemässe Kabelabzweigklemme 1 ist, wie in Fig. 9 [E] dargestellt, somit unverlierbar mit dem Kabelstrang K verbunden. Dies bringt die Möglichkeit mit sich, dass der Benutzer nun seine weiteren Schritte somit unabhängig von der Anordnung der Kabelabzweigklemme 1 ausführen kann.

Gemäss Fig. 9 [F] besteht der weitere Schritt nun darin, die Adern des Abzweigkabels A entsprechend vorzubereiten und anzuordnen und zwar derart, dass diese, so wie in Fig. 9 [G] dargestellt, mit den entsprechenden Druckkörpern 3 versehen werden.

In Fig. 9 [H] weisen die Adern des Abzweigkabels A entsprechende Druckkörper 3 auf, die dann in die Ausnehmungen 13 der Kabelabzweigklemme 1 eingeführt werden. Wie zuvor schon beschrieben, findet dort eine entsprechende Verrastung statt, sodass nun, nachdem die Druckkörper 3 in die Ausnehmungen 13 der Kabelabzweigklemme 1 eingeführt worden sind, wieder ein eigenständiges Objekt bilden, sodass der Anwender wiederum frei ist, das entsprechende Funktionselement 7, wie es in Fig. 9 [I] dargestellt ist, am Aussenumfang der Kabelabzweigklemme 1 anzubringen.

Durch das Zusammenziehen des entsprechenden Funktionselement 7 werden die Druckkörper 3 axial zur Mitte des Druckkörpers 3 hin zwangsgeführt, sodass sich die Adern des Abzweigkabels A in die Kontaktelemente 4, wie sie beispielsweise in Fig. 9 [H] dargestellt sind, eindrücken. Zusätzlich werden die Kontaktelemente 4 , insbesondere durch den Druck der Druckkörper 3, auch in die jeweiligen Adern K1 - K4 des Kabelstranges K gedrückt, sodass nun zwischen dem Kabelstrang K und dem Abzweigkabel A eine elektrische Verbindung herbeigeführt worden ist.

### Bezugszeichenliste

- 1: Kabelabzweigklemme
- 2 (2.1, 2.2): Kontaktträger
- 3: Druckkörper
- 4: Kontaktelement
- 5: Schwalbenschwanzführung
- 6: pfeil
- 7: Funktionselement (Ringschelle)
- 8: Hilfsinstrument (Schraubendreher)
- 9: Hauptkeil
- 10: Nebenkeil
- 11: freies Ende
- 12: freies Ende
- 13: Ausnehmung
- 14: Rastelemente
- 15: Aussparung
- 16: Spitze
- 17: Aufnahmebereich
- 18: Clipselement
- 19: Auflagefläche
- 20: Aufnahmebereich
- 21: Clipselement
- 22: Auflagefläche

- K: Kabelstrang
- K1 ~ K4: Adern
- A: Abzweigkabel
- E1: Ebene
- E2: Ebene
- S: Sollbruchstelle

## Patentansprüche

1. Kabelabzweigklemme (1) zum Verbinden von mindestens einem aus mehreren Adern (K1 - K4) bestehenden Kabelstrang (K) und einem aus mindestens einer Ader bestehenden Abzweigkabel (A), bestehend aus,
- mindestens einem ringförmigen Kontaktträger (2) zur Aufnahme der Kabel (K, A),
- mindestens einem Kontaktelement (4), das innerhalb des Kontaktträgers (2) angeordnet und zur Herstellung einer elektrisch leitenden Verbindung zwischen dem Kabelstrang (K) und dem Abzweigkabel (A) vorgesehen ist und
- mindestens einem Druckkörper (3), der mit dem Kontaktelement (4) innerhalb der Kontaktträgers (2) verschiebbar gelagert ist,
**dadurch gekennzeichnet, dass**
jeder Druckkörper (3) innerhalb des Kontaktträgers (2) radial zu dessen axialer Mitte hin zwangsgeführt ist und durch ein Funktionselement (7), das den ringförmigen Kontaktträger (2) vollständig umgibt, derart in seiner radialen Lage veränderbar ist, dass bei einer Betätigung des Funktionselements (7) sich jeder der mit diesem in Kontakt stehende Druckkörper (3) gleichzeitig in Richtung (Pfeil 6) des Kontaktelements (4) bewegt und dieses in den Kabelstrang (K) drückt.

2. Kabelabzweigklemme nach Anspruch 1, **dadurch gekennzeichnet, dass** die Führung für jeden innerhalb des Kontaktträgers (2) zwangsgeführten Druckkörper (3) Rastelemente (14) aufweist.

3. Kabelabzweigklemme nach Anspruch 2, **dadurch gekennzeichnet, dass** die Rastelemente(14) derart angeordnet sind, dass jeder der Druckkörper (3) ausschliesslich radial zur axialen Mitte des Kontaktträgers (2) hin verschiebbar ist (Pfeil 6).

4. Kabelabzweigklemme nach einem der Ansprüche 1 - 3, **dadurch gekennzeichnet, dass** als Führungselement (7) eine Ringschelle dient, deren Durchmesser durch eine Sollbruchstelle (S) begrenzt verringerbar ist.

5. Kabelabzweigklemme nach mindestens einem der vorherigen Ansprüche, mit Trennflächen zur Aufweitung des Kabelstrangs (K) bzw. dessen einzelnen Adern (K1 - K4), **dadurch gekennzeichnet, dass** für diese Aufweitung schwertartige Druckkeile in der Ausbildung von einem Hauptkeil (9) und zwei Nebenkeilen (10) vorgesehen sind.

6. Kabelabzweigklemme nach Anspruch 5, **dadurch gekennzeichnet, dass** der Hauptkeil (9) ein freies Ende (11) aufweist, mit dem dieser über eine Anlagefläche (19) und Clipselemente (18) form- und kraftschlüssig mit dem Kontaktträger (2) verbindbar ist.

7. Kabelabzweigklemme nach Anspruch 5, **dadurch gekennzeichnet, dass** die Nebenkeile (10) jeweils ein freies Ende (12) aufweisen, mit dem diese über eine Anlagefläche (22) und Clipselemente (21) mit dem Kontaktträger (2) verbindbar sind.

## Claims

1. Cable tap (1) for connecting at least one cable run (K) comprising a plurality of cores (K1 - K4) and a branch cable (A) comprising at least one core, said cable tap comprising
- at least one annular contact carrier (2) for receiving the cables (K, A),
- at least one contact element (4), which is arranged within the contact carrier (2) and is provided for producing an electrically conductive connection between the cable run (K) and the branch cable (A), and
- at least one pressure element (3), which is mounted such that it can move with the contact element (4) within the contact carrier (2),
**characterized in that** each pressure element (3) is positively driven within the contact carrier (2) radially towards the axial centre thereof, and the radial position of each pressure element can be altered by a functional element (7), which completely surrounds the annular contact carrier (2), in such a way that, when the functional element (7) is actuated, each of the pressure elements (3) which are in contact with said functional element moves simultaneously in the direction (arrow 6) of the contact element (4) and presses said contact element into the cable run (K).

2. Cable tap according to Claim 1, **characterized in that** the guide for each pressure element (3) which is positively driven within the contact carrier (2) has latching elements (14).

3. Cable tap according to Claim 2, **characterized in that** the latching elements (14) are arranged in such a way that each of the pressure elements (3) can be moved exclusively radially towards the axial centre of the contact carrier (2) (arrow 6).

4. Cable tap according to one of Claims 1-3, **characterized in that** an annular clamp with a diameter which can be reduced to a limited extent by a desired breaking point (S) is used as guide element (7).

5. Cable tap according to at least one of the preceding claims, having separating faces for widening the cable run (K) or the individual cores (K1 - K4) thereof, **characterized in that**, for this widening, blade-like pressure wedges in the form of a main wedge (9) and two auxiliary wedges (10) are provided.

6. Cable tap according to Claim 5, **characterized in that** the main wedge (9) has a free end (11), with which said main wedge can be connected in a formfitting and force-fitting manner to the contact carrier (2) via a bearing face (19) and clip elements (18).

7. Cable tap according to Claim 5, **characterized in that** the auxiliary wedges (10) each have a free end (12), with which said auxiliary wedges can be connected to the contact carrier (2) via a bearing face (22) and clip elements (21).

## Revendications

1. Connecteur de repiquage sur câble (1) pour relier au moins un faisceau de câble (K) constitué de plusieurs fils (K1-K4) et un câble de repiquage (A) constitué d'au moins un fil, constitué de :
- au moins un support de contact annulaire (2) pour recevoir le câble (K,A),
- au moins un élément de contact (4), qui est disposé à l'intérieur du support de contact (2) et prévu pour établir une liaison conductrice électriquement entre le faisceau de câble (K) et le câble de repiquage (A) et
- au moins un corps de pression (3), qui est positionné de manière déplaçable avec l'élément de contact (4) à l'intérieur du support de contact (2),
**caractérisé en ce que**
chaque corps de pression (3) à l'intérieur du support de contact (2) est guidé par contrainte radialement au milieu axial de celui-ci et peut être varié dans sa position radiale par un élément fonctionnel (7), qui entoure complètement le support de contact annulaire (2), de telle sorte que lors d'un actionnement de l'élément fonctionnel (7), chaque corps de contact (3) se trouvant en contact avec celui-ci se déplace simultanément dans la direction (flèche 6) de l'élément de contact (4) et presse celui-ci dans le faisceau de câble (K).

2. Connecteur de repiquage sur câble selon la revendication 1, **caractérisé en ce que** le guidage pour chaque corps de pression (3) guidé par contrainte à l'intérieur du support de contact (2) présente des éléments d'encliquetage (14).

3. Connecteur de repiquage sur câble selon la revendication 2, **caractérisé en ce que** les éléments d'encliquetage (14) sont disposés de telle sorte que chacun des corps de pression (3) puisse être déplacé (flèche 6) exclusivement radialement au centre axial du support de contact (2).

4. Connecteur de repiquage sur câble selon une des revendications 1 à 3, **caractérisé en ce qu'**une coque annulaire sert comme élément de guidage (7), dont le diamètre peut être diminué de manière limitée par un point de rupture de consigne (S).

5. Connecteur de repiquage sur câble selon au moins une des revendications précédentes, comportant des surfaces de séparation pour élargir le faisceau de câble (K), respectivement ses fils individuels (K1-K4), **caractérisé en ce qu'**en vue de cet élargissement, des clavettes en forme de glaive sont prévues dans la configuration d'une clavette principale (9) et deux clavettes annexes (10).

6. Connecteur de repiquage sur câble selon la revendication 5, **caractérisé en ce que** la clavette principale (9) présente une extrémité libre (11), par laquelle celle-ci peut être reliée par l'intermédiaire d'une surface de positionnement (19) et d'éléments de clipsage (18) par conjonction de forme et de force avec le support de contact (2).

7. Connecteur de repiquage sur câble selon la revendication 5, **caractérisé en ce que** les clavettes annexes (10) présentent respectivement une extrémité libre (12), par laquelle celles-ci peuvent être reliées par l'intermédiaire d'une surface de positionnement (22) et d'éléments de clipsage (21) avec le support de contact (2).
